(19) Europäisches Patentamt
European Patent Office
Office européen des brevets

(11) Veröffentlichungsnummer: **0 332 006 B1**

(12) # EUROPÄISCHE PATENTSCHRIFT

(45) Veröffentlichungstag der Patentschrift: **13.01.93**

(51) Int. Cl.[5]: **C09K 19/42**, C09K 19/46

(21) Anmeldenummer: **89103413.4**

(22) Anmeldetag: **27.02.89**

Verbunden mit 89902768.4/0362317 (europäische Anmeldenummer/Veröffentlichungsnummer) durch Entscheidung vom 28.11.91.

(54) **Smektisches Flüssigkristallmedium.**

(30) Priorität: **10.03.88 DE 3807862**

(43) Veröffentlichungstag der Anmeldung: **13.09.89 Patentblatt 89/37**

(45) Bekanntmachung des Hinweises auf die Patenterteilung: **13.01.93 Patentblatt 93/02**

(84) Benannte Vertragsstaaten: **CH DE ES FR GB GR IT LI LU NL SE**

(56) Entgegenhaltungen:
**WO-A-88/07514**
**WO-A-88/09322**
**DE-A- 3 710 069**

(73) Patentinhaber: **MERCK PATENT GESELLSCHAFT MIT BESCHRÄNKTER HAFTUNG**
**Frankturter Strasse 250 Postfach 4119**
**W-6100 Darmstadt(DE)**

(72) Erfinder: **Reiffenrath, Volker**
**Jahnstrasse 18**
**W-6101 Rossdorf(DE)**
Erfinder: **Krause, Joachim, Dr.**
**Samuel-Morse-Strasse 14**
**W-6110 Dieburg(DE)**
Erfinder: **Wächtler, Andreas, Dr.**
**Goethestrasse 34**
**W-6103 Griesheim(DE)**
Erfinder: **Geelhaar, Thomas, Dr.**
**Trajanstrasse 12**
**W-6500 Mainz(DE)**
Erfinder: **Coates, David, Dr.**
**87, Sopwith Crescent Merley**
**Wimborne Dorset BH21 3SW(GB)**
Erfinder: **Sage, Ian Charles, Dr.**
**58, Wentworth Drive**
**Broadstone Dorset BH18 8EG(GB)**
Erfinder: **Greenfield, Simon, Dr.**
**2, Blackbird Close**
**Creekmoor Poole, BH17 7YA(GB)**

EP 0 332 006 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft chirale getiltete smektische Flüssigkristallmedien mit mindestens zwei flüssigkristallinen Komponenten und mindestens einem chiralen Dotierstoff, dadurch gekennzeichnet, daß es mindestens eine Verbindung der Formel I enthält,

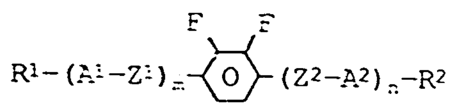

I

worin

$R^1$ und $R^2$ jeweils unabhängig voneinander unsubstituiertes, einfach durch Cyan oder mindestens einfach durch Fluor oder Chlor substituiertes Alkyl mit 1 bis 15 C-Atomen, wobei in diesen Resten jeweils auch eine $CH_2$-Gruppe durch -O-, -CO-, -O-CO-, -CO-O- oder -O-CO-O ersetzt sein kann, einer der Reste $R^1$ und $R^2$ auch einen Chiralität induzierenden organischen Rest Q* mit einem asymmetrischen Kohlenstoffatom der Formel

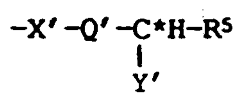

worin

X' -CO-O-, -O-CO-, -O-CO-O-, -CO-, -O-, -S-, -CH=CH-, -CH=CH-COO- oder eine Einfachbindung,

Q' Alkylen mit 1 bis 5 C-Atomen, worin auch eine nicht mit X' verknüpfte $CH_2$-Gruppe durch -O-, -CO-, -O-CO-, -CO-O- oder -CH=CH- ersetzt sein kann, oder eine Einfachbindung,

Y' CN, Halogen, Methyl oder Methoxy, und

$R^5$ eine von Y verschiedene Alkylgruppe mit 1 bis 15 C-Atomen, worin auch eine oder zwei nicht benachbarte $CH_2$-Gruppen durch -O-, -CO-, -O-CO-, -CO-O- und/oder -CH=CH- ersetzt sein können,

bedeutet,

$A^1$ und $A^2$ jeweils unabhängig voneinander unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N ersetzt sein können, 1,4-Cyclohexylen, worin auch eine oder zwei nicht benachbarte $CH_2$-Gruppen durch O-Atome und/oder S-Atome ersetzt sein können, Piperidin-1,4-diyl, 1,4-Bicyclo(2,2,2)octylen, 1,3,4-Thiadiazol-2,5-diyl, Naphthalin-2,6-diyl- oder 1,2,3,4-Tetrahydronaphthalin-2,6-diyl,

$Z^1$ und $Z^2$ jeweils -CO-O-, -O-CO-, $-CH_2CH_2-$, $-OCH_2-$, $-CH_2O-$, -C≡C- oder eine Einfachbindung,

m und n jeweils 0, 1 oder 2, und

(m + n) 1 oder 2 bedeutet,

mit der Maßgabe, daß eine oder zwei der im Molekül der Formel I anwesenden Gruppen $Z^1$ und/oder $Z^2$ -CO-O-, -O-CO-, $-CH_2CH_2-$, $-OCH_2-$, $-CH_2O-$ oder -C≡C- bedeuten, falls $A^1$ und $A^2$ jeweils unabhängig voneinander unsübstituiertes oder durch ein oder zwei F-Atome substituiertes 1,4-Phenylen bedeuten.

Chirale getiltete smektische flüssigkristalline Medien mit ferroelektrischen Eigenschaften können hergestellt werden, in dem man Basis-Mischungen mit einer oder mehreren getilteten smektischen Phasen mit einem geeigneten chiralen Dotierstoff versetzt (L.A. Beresnev et al., Mol. Cryst. Liq. Cryst. 89, 327 (1982); H.R. Brand et al., J. Physique 44 (lett.), L-771 (1983)).Solche Phasen können als Dielektrika für schnell schaltende Displays verwendet werden, die auf dem von Clark und Lagerwall beschriebenen Prinzip der SSFLC-Technologie (N.A. Clark und S.T. Lagerwall, Appl. Phys. Lett. 36, 899 (1980); USP 4,367,924) auf der Basis der ferroelektischen Eigenschaften des chiralen getilteten Mediums beruhen. In diesem Medium sind die langgestreckten Moleküle in Schichten angeordnet, wobei die Moleküle einen Tiltwinkel zur Schichtennormalen aufweisen. Beim Fortschreiten von Schicht zu Schicht ändert sich die Tiltrichtung um einen kleinen Winkel bezüglich einer senkrecht zu den Schichten stehenden Achse, so daß eine Helixstruktur ausgebildet wird. In Displays, die auf dem Prinzip der SSFLC-Technologie beruhen, sind die smektischen Schichten senkrecht zu den Platten der Zelle angeordnet. Die helixartige Anordnung der Tiltrichtungen der Moleküle wird durch einen sehr geringen Abstand der Platten (ca. 1 - 2 µm) unterdrückt. Dadurch werden die Längsachsen der Moleküle gezwungen, sich in einer Ebene parallel zu den Platten der Zelle anzuordnen, wodurch zwei ausgezeichnete Tiltorientierungen entstehen. Durch Anlegen eines geeigneten elek-trischen Wechselfeldes kann in dem eine spontane Polarisation aufweisenden flüssigkristallinen Medium zwischen diesen beiden Zuständen hin- und hergeschaltet werden. Dieser Schaltvorgang ist wesentlich schneller als bei herkömmlichen verdrillten Zellen (TN-LCD's), die auf nematischen Flüssigkristallen basieren.

Ein großer Nachteil für viele Anwendungen der derzeit verfügbaren Materialien mit chiralen getilteten smektischen Phasen (wie z.B. Sc*, jedoch auch $S_H$*, $S_I$*, $S_J$*, $S_K$*, $S_G$*, $S_F$*) ist deren geringe chemische, thermische und Photo-Stabilität. Eine weitere nachteilige Eigenschaft von Displays basierend auf derzeit verfügbaren chiralen getilteten smektischen Medien ist, daß die Spontanpolarisation zu kleine Werte aufweist, so daß das Schaltzeitverhalten der Displays ungünstig beeinflußt wird und/oder der Pitch und/oder der Tilt und/oder die Viskosität der Phasen nicht den Anforderungen der Display-Technologie entspricht. Darüberhinaus ist meist der Temperaturbereich der ferroelektrischen Medien zu klein und liegt überwiegend bei zu hohen Temperaturen.

Es wurde nun gefunden, daß die Verwendung von Verbindungen der Formel I als Komponenten chiraler getilteter smektischer Medien die erwähnten Nachteile wesentlich vermindern kann. Die Verbindungen der Formel I sind somit als Komponenten chiraler getilteter smektischer flüssigkristalliner Medien vorzüglich geeignet. Insbesondere sind mit ihrer Hilfe chemisch besonders stabile chirale getiltete smektische flüssigkristalline Medien mit günstigen ferroelektrischen Phasenbereichen, günstigen Weiten für die Viskosität, insbesondere mit breiten Sc* Phasenbereichen, hervorragender Unterkühlbarkeit bis zu Temperaturen unter 0 °C ohne daß Kristallisation auftritt und für derartige Phasen hohen Werten für die spontane Polarisation herstellbar. P ist die spontane Polarisation in nC/cm$^2$.

Die Verbindungen der Formel I besitzen einen breiten Anwendungsbereich. In Abhängigkeit von der Auswahl der Substituenten können diese Verbindungen als Basismaterialien dienen, aus denen flüssigkristalline smektische Medien zum überwiegenden Teil zusammengesetzt sind; es können aber auch Verbindungen der Formel I flüssigkristallinen Basismaterialien aus anderen Verbindungklassen zugesetzt werden, um beispielsweise die dielektrische und/oder optische Anisotropie und/oder die Viskosität und/oder die spontane Polarisation und/oder den Phasenbereiche und/oder der Tiltwinkel und/oder den Pitch eines solchen Dielektrikums zu variieren.

Gegenstand der Erfindung ist somit ein chirales getiltetes smektisches Flüssigkristallmedium enthaltend mindestens zwei flüssigkristalline Komponenten und mindestens einen chiralen Dotierstoff, wobei dieses Medium mindestens eine Verbindung der Formel I als Komponenten chiraler getilteter smektischer flüssigkristalliner Medien. Gegenstand der Erfindung sind ferner elektrooptische Anzeigeelemente, insbesondere ferroelektrische elektrooptische Anzeigeelemente, die derartige Medien enthalten.

Die erfindungsgemäßen Medien enthalten vorzugsweise mindestens zwei, insbesondere mindestens drei Verbindungen der Formel I. Besonders bevorzugt sind erfindungsgemäße chirale getiltete smektische flüssigkristalline Medien, deren achirale Basismischung neben Verbindungen der Formel I mindestens eine andere Komponente mit betragsmäßig kleiner dielektrischer Anisotropie, niedriger Viskosität und breitem $S_C$-Phasenbereich enthalten. Diese weitere(n) Komponente(n) der achiralen Basismischung können beispielsweise 40 bis 90 %, vorzugsweise 50 bis 80 %, der Basismischung ausmachen. Als geeignete Komponenten kommen insbesondere Verbindungen der Teilformeln IIa bis IIh in Frage:

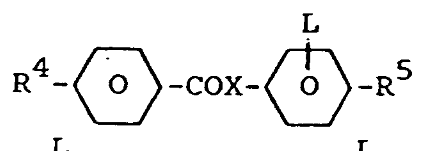

IIa

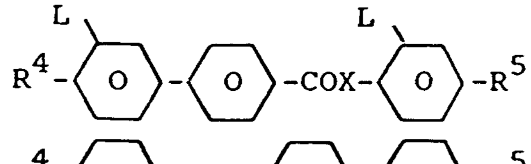

IIb

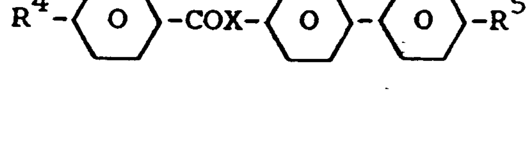

IIc

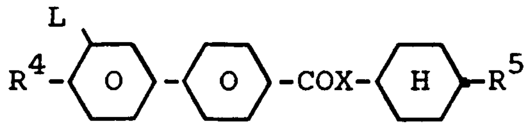

IId

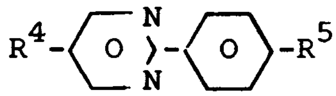

IIe

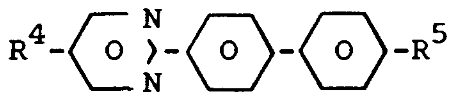

IIf

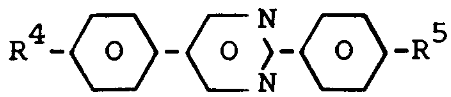

IIg

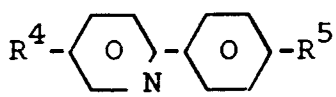

IIh

$R^4$ und $R^5$ sind jeweils vorzugsweise Alkyl, Alkoxy, Alkanoyloxy oder Alkoxycarbonyl mit jeweils 3 bis 12 C-Atomen. X ist vorzugsweise O. In den Verbindungen der Formeln IIa bis IIg kann auch eine 1,4-Phenylengruppe lateral durch Halogen, insbesondere bevorzugt durch Fluor, substituiert sein. Vorzugsweise ist einer der Gruppen $R^4$ und $R^5$ Alkyl und die andere Gruppe Alkoxy. L ist jeweils unabhänig voneinander H oder F. In IIa kann das F-Atom in ortho- oder meta-Position zu $R^5$ sein.

Besonders bevorzugt sind die Verbindungen der Teilformeln IIa bis IIh, worin $R^4$ und $R^5$ jeweils geradkettiges Alkyl oder Alkoxy mit jeweils 5 bis 10 C-Atomen bedeutet.

Ferner bevorzugt sind erfindungsgemäße Medien, die neben Komponenten der Formeln IIa bis IIg noch mindestens eine Komponente mit deutlich negativer dielektrischer Anisotropie enthalten ($\Delta\epsilon \leq -2$). Besonders geeignet sind hier Verbindungen der Formeln IIIa bis IIIc,

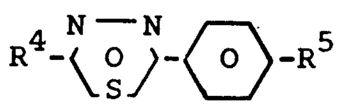

IIIa

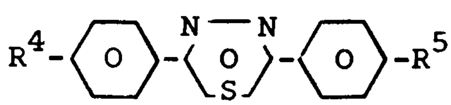

IIIb

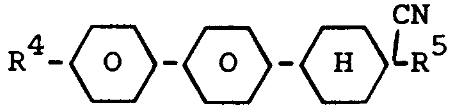

IIIc

worin $R^4$ und $R^5$ die bei den Formeln IIa bis IIg angegebenen allgemeinen und bevorzugten Bedeutungen haben. In den Verbindungen der Formeln IIIa, IIIb und IIIc kann auch eine 1,4-Phenylengruppe lateral durch Halogen, vorzugsweise Fluor, substituiert sein.

Die Verbindungen der Formel I umfassen insbesondere zweikernige und dreikernige Materialien. Von den zweikernigen, welche bevorzugt sind, sind diejenigen bevorzugt, worin $R^1$ n-Alkyl oder n-Alkoxy mit 7 bis 12, insbesondere 7 bis 9, C-Atome bedeutet.

Weiterhin bevorzugt sind Verbindungen der Formel I worin $R^1$ n-Alkyl mit 7 bis 10 C-Atomen bedeutet und $R^2$ n-Alkanoyloxy, n-Alkoxycarbonyl oder n-Alkylthio mit jeweils 5 bis 10 C-Atomen ist.

Die erfindungsgemäßen Medien enthalten vorzugsweise mindestens eine dreikernige Verbindung der

Formel I. Diese Medien zeichnen sich durch besonders hohe $S_C/S_A$-Umwandlungstemperaturen aus.

In Formel I bedeuten $R^1$ und $R^2$ jeweils unabhängig voneinander vorzugsweise Alkyl oder Alkoxy mit 5 bis 15 C-Atomen.

$A^1$ und $A^2$ sind bevorzugt Cy oder Ph. In den Verbindungen der vor- und nachstehenden Formeln bedeutet Ph vorzugsweise eine 1,4-Phenylen- (Phe), eine Pyrimidin-2,5-diyl-(Pyr), eine Pyridin-2,5-diyl-(Pyn), eine Pyrazin-3,6-diyl- oder eine Pyridazin-2,5-diyl-Gruppe, insbesondere bevorzugt Phe, Pyr oder Pyn. Vorzugsweise enthalten die erfindungsgemäßen Verbindungen nicht mehr als eine 1,4-Phenylengruppe, worin eine oder zwei CH-Gruppen durch N ersetzt sind. Cy bedeutet vorzugsweise eine 1,4-Cyclohexylengruppe. Insbesondere bevorzugt sind jedoch Verbindungen der Formel I, worin eine der Gruppen $A^2$, $A^3$ und $A^4$ eine in 1- oder 4-Position durch CN substituierte 1,4-Cyclohexylengruppe bedeutet und die Nitrilgruppe sich in axialer Position befindet, d.h. die Gruppe $A^2$, $A^3$ bzw. $A^4$ die folgende Konfiguration aufweist:

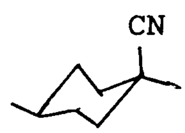

Besonders bevorzugt sind Verbindungen der Formel I und der vorstehenden Teilformeln, die eine Gruppierung -Ph-Ph- enthalten. -Ph-Ph- ist vorzugsweise -Phe-Phe-, Phe-Pyr oder Phe-Pyn. Besonders bevorzugt sind die Gruppen

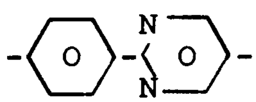 und 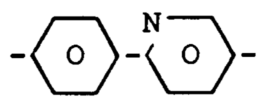 ,

sowie

ferner unsubstituiertes oder ein- oder mehrfach durch Fluor substituiertes 4,4'-Biphenylyl.

$Z^1$ und $Z^2$ sind bevorzugt Einfachbindungen, in zweiter Linie bevorzugt -O-CO-, -CO-O-, -C≡C- oder $-CH_2CH_2-$Gruppen. Vorzugsweise ist nur eine der im Molekül vorhandenen Gruppen $Z^1$ und $Z^2$ von der Einfachbindung verschieden. $Z^1$ = $Z^2$ = Einfachbindung ist besonders bevorzugt.

Bevorzugte verzweigte Reste $R^1$ bzw. $R^2$ sind Isopropyl, 2-Butyl (= 1-Methylpropyl), Isobutyl (= 2-Methylpropyl), tert.-Butyl, 2-Methylbutyl, Isopentyl (= 3-Methylbutyl), 2-Methylpentyl, 3-Methylpentyl, 4-Methylpentyl, 2-Ethylhexyl, 5-Methylhexyl, 2-Propylpentyl, 6-Methylheptyl, 7-Methyloctyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy, 2-Oxa-3-methylbutyl, 3-Oxa-4-methylpentyl.

In den Verbindungen der Formel I sowie in den vor- und nachstehenden Teilformeln ist $-(A^1-Z^1)_m-PheF_2-(Z^2-A^2)_n-$vorzugsweise eine Gruppe der folgenden Formeln 1 bis 16 oder deren Spiegelbild:

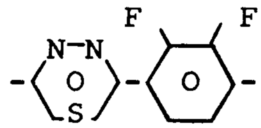

1

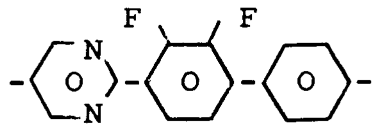

2

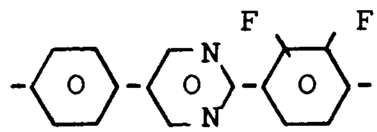

3

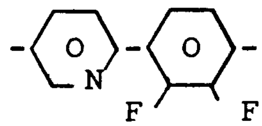

4

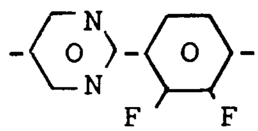

5

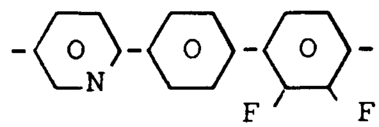

6

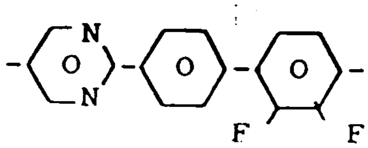

7

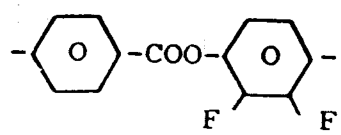

8

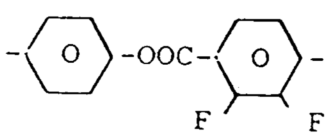

9

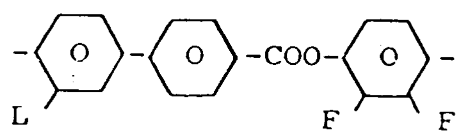

10

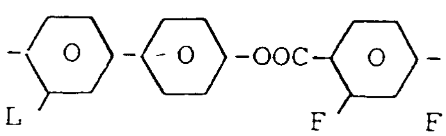

11

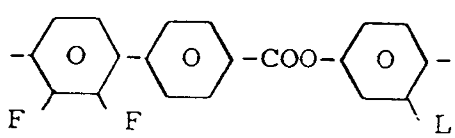

12

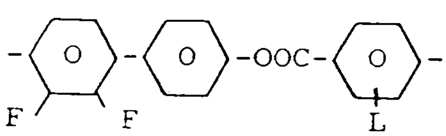

13

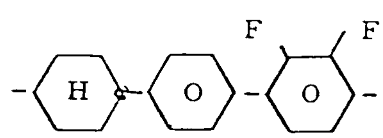

14

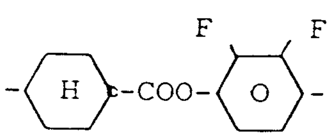

15

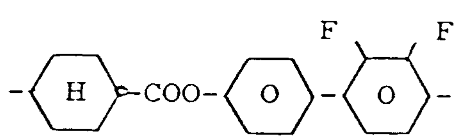

16

Gruppen der Formeln 1, 3, 4, 5, 7, 8, 10, 11, 12 und 13, insbesondere diejenigen der Formeln 1, 3 und 10-13, sind besonders bevorzugt` L ist H oder F.

Der Rest $R^1$ kann auch ein optisch aktiver organischer Rest mit einem asymmetrischen Kohlenstoffatom sein. Vorzugsweise ist dann das asymmetrische Kohlenstoffatom mit zwei unterschiedlich substituierten C-Atomen, einem H-Atom und einem Substituenten ausgewahlt aus der Gruppe Halogen (insbesondere F, Cl oder Br), Alkyl oder Alkoxy mit jeweils 1 bis 5 C-Atomen und CN verknüpft. Der optisch aktive organische Rest $R^1$ bzw. $Q^*$ hat die Formel,

$$\begin{array}{c}-X'-Q'-C^{*}H-R^{5}\\ \quad\quad\quad\quad | \\ \quad\quad\quad\quad Y'\end{array}$$

worin

- X' -CO-O-, -O-CO-, -O-CO-O-, -CO-, -O-, -S-, -CH=CH-, -CH=CH-COO- oder eine Einfachbindung,
- Q' Alkylen mit 1 bis 5 C-Atomen, worin auch eine nicht mit X' verknüpfte $CH_2$-Gruppe durch -O-, -CO-, -O-CO-, -CO-O- oder -CH=CH- ersetzt sein kann, oder eine Einfachbindung,
- Y' CN, Halogen, Methyl oder Methoxy, und
- $R^5$ eine von Y verschiedene Alkylgruppe mit 1 bis 15 C-Atomen, worin auch eine oder zwei nicht benachbarte $CH_2$-Gruppen durch -O-, -CO-, -O-CO-, -CO-O- und/oder -CH=CH- ersetzt sein können,

bedeutet.

- X' ist vorzugsweise -CO-O-, -O-CO-, -CH=CH-COO- (trans) oder eine Einfachbindung. Besonders bevorzugt sind -CO-O-/-O-CO- oder eine Einfachbindung.
- Q' ist vorzugsweise $-CH_2-$, $-CH_2CH_2-$, $-CH_2CH_2CH_2-$ oder eine Einfachbindung, insbesondere bevorzugt eine Einfachbindung.
- Y' ist vorzugsweise $CH_3$, -CN, F oder Cl, insbesondere bevorzugt CN oder F.
- $R^5$ ist vorzugsweise geradkettiges oder verzweigtes Alkyl mit 1 bis 10, insbesondere mit 1 bis 7, C-Atomen.

Besonders bevorzugt sind Verbindungen der Formel I'

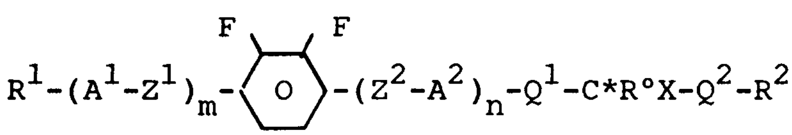

I'

worin $Q^1$, $Q^2$, R° und X die in Anspruch 2 angegebene Bedeutung haben. R° ist eine von X und $Q^2$-$R^2$ verschiedene Alkylgruppe mit vorzugsweise 1 bis 5 C-Atomen. Besonders bevorzugt sind Methyl und Ethyl, insbesondere Methyl. $R^2$ ist vorzugsweise eine Alkylgruppe mit 2 bis 10, insbesondere mit 2 bis 6, C-Atomen. $Q^1$ und $Q^2$ bedeuten vorzugsweise jeweils unabhängig voneinander -O-CO- (wobei das Carbonylkohlenstoffatom mit dem asymmetrischen C-Atom C* verknüpft ist), $-O-CH_2-$(wobei die Methylengruppe mit dem asymmetrischen C-Atom C* verknüpft ist), $-CH_2CH_2-$, $-CH_2-$ oder eine Einfachbindung (-). Besonders bevorzugte Kombinationen von $Q^1$ und $Q^2$ sind in der folgenden Tabelle angegeben:

| | | | | | | |
|---|---|---|---|---|---|---|
| $Q^1$ | -O-CO- | $-O-CH_2-$ | $-CH_2-$ | $-CH_2CH_2-$ | $-CH_2-$ | $-CH_2CH_2-$ |
| $Q^2$ | - | - | -CO-O- | -CO-O- | $-CH_2-O-$ | $-CH_2-O-$ |

In den bevorzugten Verbindungen der vor- und nachstehenden Formeln können die Alkylreste, in denen auch eine $CH_2$-Gruppe (Alkoxy bzw. Oxaalkyl) durch ein O-Atom ersetzt sein kann, geradkettig oder verzweigt sein. Vorzugsweise haben sie 5, 6, 7, 8, 9 oder 10 C-Atome und bedeuten demnach bevorzugt Pentyl, Hexyl, Heptyl, Octyl, Nonyl, Decyl, Pentoxy, Hexoxy, Heptoxy, Octoxy, Nonoxy oder Decoxy, ferner auch Ethyl, Propyl, Butyl, Undecyl, Dodecyl, Propoxy, Ethoxy, Butoxy, Undecoxy, Dodecoxy, 2-Oxapropyl (= 2-Methoxymethyl), 2- (= Ethoxymethyl) oder 3-Oxabutyl (= 2-Methoxy ethyl), 2-, 3- oder 4-Oxapentyl, 2-, 3-, 4- oder 5-Oxahexyl, 2-, 3-, 4-, 5- oder 6-Oxaheptyl.

Besonders bevorzugt ist ein erfindungsgemäßes Merdium, welches mindestens 25 % an einer oder mehreren Verbindungender Formel II enthält,

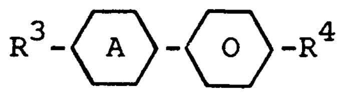

II

worin

$R^3$ und $R^4$ jeweils unabhängig voneinander unsubstituiertes, einfach durch Cyan oder mindestens einfach durch Fluor oder Chlor substituiertes Alkyl mit 1 bis 15 C-Atomen oder Alkenyl mit 3 bis 15 C-Atomen, wobei in diesen Resten jeweils auch eine $CH_2$-Gruppe durch -O-, -O-CO-, -CO-O- oder -O-CO-O- ersetzt sein kann,

und Ring A Pyrimidin-2,5-diyl oder Pyridin-2,5-diyl ist.

Bevorzugt sind Verbindungen der Formel IId, IIg und/oder IIh enthalten.

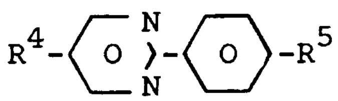

IId

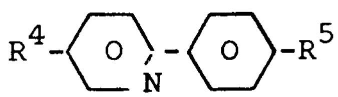

IIg

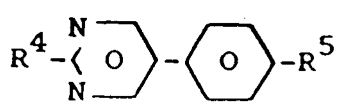

IIh

worin $R^4$ und $R^5$, jeweils unabhängig voneinander Alkyl, Alkoxy, Alkanoyloxy oder Alkoxycarbonyl mit jeweils 3 bis 12 C-Atomen bedeuten.

Besonders bevorzugt ist ein Medium welches eine oder mehrere Verbindungen der Formeln IId und/oder IIh und gleichzeitig eine oder mehrere Verbindungen der Formel IIg enthält.

Ein bevorzugtes Medium enthält 2 bis 25 % eines chiralen Dotierstoffes, welcher vorzugsweise eine $S_c^*$ -Phase aufweist.

Ein bevorzugtes Medium enthält 8 bis 50 % an einer oder mehreren Verbindungen der Formel I.

Bevorzugt sind Verbindungen der Formel Ia',

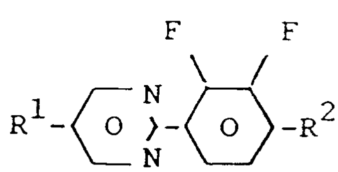

Ia'

worin $R^1$ und $R^2$ die angegebene Bedeutung haben.

$Q^*$ ist vorzugsweise ein Rest der Formel

$-Q^1-C^*R^\circ X-Q^2-R^2$

worin

$Q^1$ und $Q^2$ jeweils unabhängig voneinander Alkylen mit 2 bis 4-C-Atomen, worin auch eine $CH_2$-

Gruppe durch -O-, -S-, -CO-, -O-CO-, -CO-O-, -S-CO-, -CO-S-, -CH = CH-COO-, -CH = CH-, -CHHalogen und/oder -CHCN- ersetzt sein kann, oder eine Einfachbindung,

X Halogen, CN, $CH_3$, $CH_2CN$ oder $OCH_3$,

R° H oder eine von X und $-Q^2-R^2$ verschiedene Alkylgruppe mit 1 bis 10 C-Atomen, und

C* ein mit vier verschiedenen Substituenten verknüpftes Kohlenstoffatom bedeutet.

Ein bevorzugtes Medium enthält eine oder mehrere Verbindungen der Formeln Ia, Ib oder Ic,

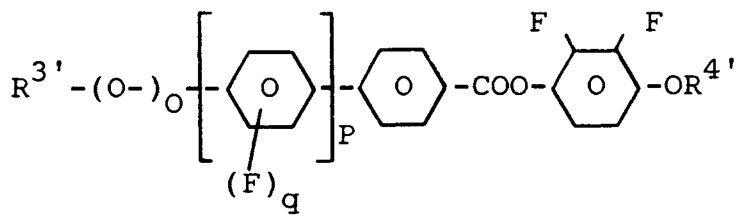

Ia,

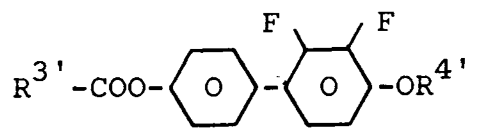

Ib,

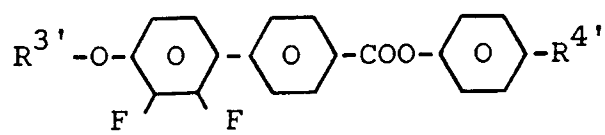

Ic

worin

$R^{3'}$ und $R^{4'}$ jeweils unabhänig voneinander Alkyl mit 1 bis 15 C-Atomen und

o, p und q jeweils 0 oder 1 bedeutet.

Ferner bevorzugt sind erfindungsgemäße Medien enthaltend lediglich Verbindungen der Formel I, worin m = O bedeutet. Diese Medien zeichnen sich durch ein besonders günstiges Tieftemperaturverhalten und besonders niedrige Viskositätswerte aus. Ferner bevorzugt sind erfindungsgemäße Medien enthaltend Verbindungen der Formel I, worin mindestens eine Gruppe $R^1$ oder $R^2$ einen verzweigtkettigen Alkyl- oder Alkoxyrest darstellt. Diese Medien zeigen ebenfalls ein günstiges Tieftemperaturverhalten.

$R^1$ und $R^2$ sind jeweils unabhängig voneinander vorzugsweise Alkyl, Alkoxy, Alkanoyl, Alkanoyloxy, Alkoxycarbonyl oder Alkoxycarbonyloxy mit jeweils vorzugsweise 5 bis 12, insbesondere 6 bis 10 C-Atomen. Besonders bevorzugt sind Alkyl und Alkoxy` Vorzugsweise ist eine der Gruppen $R^1$ und $R^2$ Alkyl. Eine besonders bevorzugte Kombination ist $R^1$ = Alkyl und $R^2$ = Alkoxy und ferner $R^1$ = Alkoxy und $R^2$ = Alkyl. Besonders bevorzugt sind $R^1$- und $R^2$-Gruppen mit geradkettigem Alkylrest.

Ferner bevorzugt sind Medien welche neben einer oder mehrerer Verbindungen der Formel I eine oder mehrere Oligophenylverbindungen der Formel 1 enthalten.

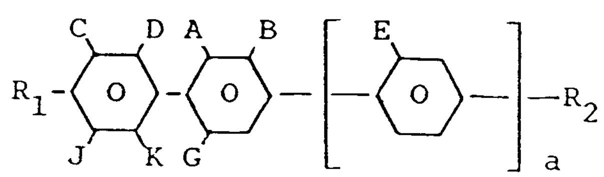

1

worin a 0 oder 1 bedeutet, und

worin die terminalen Substituenten

$R_1$, $R_2$ und $R_3$ jeweils unabhängig voneinander, gegebenenfalls mit CN oder mit mindestens einem Halogenatom substituierten, Alkyl- oder Alkenylrest mit bis zu 15 C-Atomen, worin eine oder mehrere nicht benachbarte $CH_2$-Gruppen dieser Reste auch durch -O-, -S-, -CO-, -O-CO-, -CO-O-, -O-CO-O- oder -C≡C- ersetzt sein können, einer dieser Reste $R_1$ und $R_2$ auch eine Gruppe der Formel,

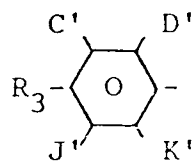

bei einem der folgenden Paare von lateralen Substituenten beide Substituenten Fluor sind:

(A,B), (C,D), (C',D')

und alle übrigen lateralen Substituenten Wasserstoff oder Fluor bedeuten.

Verbindungen der Formel 1 bzw. chirale getiltete smektische Flüssigkristallmedien enthaltend Oligophenyle der Formel 1 sind Gegenstand der Internationalen Patentanmeldung PCT/EP 88/00724 (WO 89/02425).

Die erfindungsgemäßen Medien enthalten eine oder mehrere chirale Komponenten. Die entsprechenden Basismischungen (d.h. der achirale Teil), welche eine getiltete smektiksche Phase aufweisen (z.B. $S_C$) sind ebenfalls Gegenstand der vorliegenden Erfindung. Durch Zugabe eines oder mehrerer Dotierstoffe kann der FAchmann ohne erfinderisches Zutun chirale getiltete smektische Medien erhalten. Bevorzugte Dotierstoffe sind diejenigen entsprechend WO 86/06373, WO 87/05018, DOS 36 38 026, DOS 38 07 802, DOS 38 43 128 und den Britischen Patentanmeldungen 86 15 316, 86 29 322, 87 24 458, 87 29 502, 87 29 503, 87 29 865 und 87 29 866.

Alle Komponenten der erfindungsgemäßen Medien sind entweder bekannt oder in an sich bekannter Weise analog zu bekannten Verbindungen herstellbar.

Die Verbindungen mit dem Strukturelement 2,3-Difluor-1,4-phenylen werden nach an sich bekannten Methoden hergestellt, wie sie in der Literatur (z. B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Ausgangsstoffe können gewünschtenfalls auch in situ gebildet werden, derart, daß man sie aus dem Reaktionsgemisch nicht isoliert, sondern sofort weiter zu den Zielverbindungen umsetzt.

Verbindungen der Formel I sind ausgehend von 1,2-Difluorbenzol zugänglich. Dieses wird nach bekanntem Verfahren (z.B. A.M. Roe et al., J. Chem. Soc. Chem. Comm., 22, 582 (1965)) metalliert und mit dem entsprechenden Elektrophil umgesetzt. Mit dem so erhaltenen 1-substituierten 2,3-Difluorbenzol läßt sich diese Reaktionssequenz ein zweites Mal mit einem geeigneten Elektrophil durchführen und man gelangt so zu den für die Synthesen der Heterocyclen geeigneten 1,4-disubstituierten 2,3-Difluorbenzolen. 1,2-Difluorbenzol bzw. 1-substituiertes 2,3-Difluorbenzol wird in einem inerten Lösungsmittel wie Diethylether, Tetrahydrofuran, Dimethoxyethan, tert-Butylmethylether oder Dioxan, Kohlenwasserstoffen wie Hexan, Heptan, Cyclohexan Benzol oder Toluol oder Gemischen dieser Lösungsmittel gegebenenfalls unter Zusatz eine Komplexierungsmittels wie Tetramethylethylendiamin (TMEDA) oder Hexamethylphosphorsäuretriamid mit Phenyllithium, Lithiumtetramethylpiperidin, n-, sek-oder tert-Butyllithium bei Temperaturen von -100 °C bis +50 °C vorzugsweise -78 °C bis 0 °C umgesetzt.

Die Lithium-2,3-difluorphenyl-Verbindungen werden bei -100 °C bis 0 °C vorzugsweise bei -50 °C mit den entsprechenden Elektrophilen umgesetzt. Geeignete Elektrophile sind Aldehyde, Ketone, Nitrile, Epoxide, Carbonsäure-Derivate wie Ester, Anhydride oder Halogenide, Halogenameisensäureester oder Kohlendioxid.

Zur Umsetzung mit aliphatischen oder aromatischen Halogen-Verbindungen werden die Lithium-2,3-difluorphenyl-Verbindungen transmetalliert und unter Übergangsmetallkatalyse gekoppelt. Besonders geeignet sind hierfür die Zink- (vgl. DE OS 36 32 410) oder die Titan-2,3-difluorphenyl-Verbindungen (vgl. DE OS 37 36 489).

Die neuen Verbindungen der Formel I sind Gegenstand folgender DE Patentanmeldungen mit demselben Anmeldetag:

| | |
|---|---|
| Derivate des 2,3-Difluorhydrochinons | (P 38 07 801) |
| Derivate der 2,3-Difluorbenzoesäure | (P 38 07 823) |
| Derivate des 2,3-Difluorphenols | (P 38 07 803) |
| Difluorbenzoesäurephenylester | (P 38 07 870) |
| Derivate des 2,3-Difluorphenols | (P 38 07 819) |
| 2,3-Difluorbiphenyle | (P 38 07 861) |
| Heterocyclische Derivate des 1,2-Difluorbenzols | (P 38 07 871) |
| Chirale Derivate des 1,2-Difluorbenzols | (P 38 07 802) |

Die dort beschriebenen Verbindungen sind bevorzugte Verbindungen der Formel I.

Die Herstellung der erfindungsgemäßen Medien erfolgt in an sich üblicher Weise. In den Regeln werden die Komponenten ineinander gelöst, zweckmäßig bei erhöhter Temperatur.

Durch geeignete Zusätze können die flüssigkristallinen Medien nach der Erfindung so modifiziert werden, daß sie in allen bisher bekannt gewordenen Arten von Flüssigkristallanzeigeelementen verwendet werden können.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben. Die Werte für die spontane Polarisation gelten für Raumtemperatur. Es bedeuten ferner: K: Kristallin-fester Zustand, S: smektische Phase (der Index kennzeichnet den Phasentyp), N: nematischer Zustand, Ch: cholesterische Phase, I: isotrope Phase. Die zwischen zwei Symbolen stehende Zahl gibt die Umwandlungstemperatur in Grad Celsius an.

Beispiel 1

Ein flüssigkristallines Medium bestehend aus

| | |
|---|---|
| 8 % | 2-p-Heptyloxyphenyl-5-octylpyrrimidin, |
| 10% | 2-p-Octyloxyphenyl-5-octylpyrimidin, |
| 14 % | 2-p-Nonyloxyphenyl-5-octylpyrimidin, |
| 3 % | 2-p-Hexyloxyphenyl-5-nonylpyrimidin, |
| 23 % | 2-p-Nonyloxyphenyl-5-nonylpyrimidin, |
| 7 % | 2-(2,3-Difluor-4-nonyloxyphenyl)-5-octylpyrimidin, |
| 9 % | 2-(2,3-Difluor-4-nonyloxyphenyl)-5-nonylpyrimidin, |
| 8 % | 2-(p-Pentyloxyphenyl)-5-(p-octylphenyl)-1,3,4-thiadiazol, |
| 8 % | 2-(p-Heptyloxyphenyl)-5-(p-octylphenyl)-1,3,4-thiadiazol und |
| 10 % | optisch aktivem 2-Cyan-2-methylhexancarbonsäure-(4'-octyloxybiphenyl-4-ylester) |

zeigt $S_c^*$ 61 $S_A$ 66 Ch 72 I und eine spontane Polarisation von 18 $nC/cm^2$ bei Raumtemperatur.

Beispiel 2

Ein flüssigkristallines Medium bestehend aus

| | |
|---|---|
| 4 % | 2-p-Octyloxyphenyl-5-heptylpyrimidin, |
| 4 % | 2-p-Nonyloxyphenyl-5-heptylpyrimidin, |
| 7 % | 2-p-Hexyloxyphenyl-5-nonylpyrimidin, |
| 12 % | 2-p-Heptyloxyphenyl-5-nonylpyrimidin, |
| 25 % | 2-p-Nonyloxyphenyl-5-nonylpyrimidin, |
| 8 % | 2-(2,3-Difluor-4-nonyloxyphenyl)-5-nonylpyrimidin, |
| 8 % | 2-(2,3-Difluor-4-octyloxybiphenyl-4'-yl)-5-heptylpyrimidin, |
| 8 % | r-1-Cyan-cis-4-(4'-octyloxybiphenyl-4-yl)-1-octylcyclohexan, |
| 7 % | 2-(p-Heptyloxyphenyl)-5-(p-pentylphenyl)-1,3,4-thiadiazol, |
| 7 % | 2-(p-Octyloxyphenyl)-5-(p-heptylphenyl)-1,3,4-thiadiazol und |
| 10 % | chiralem Ethyl-2-[p-(5-nonylpyrimidin-2-yl)-phenoxy]-propionat |

zeigt $S_c^*$ 58 $S_A$ 64 Ch 75 I und eine spontane Polarisation von 10 nC/cm$^2$ bei Raumtemperatur.

Beispiel 3

Ein flüssigkristallines Medium bestehend aus

| | |
|---|---|
| 6 % | 4-Octyloxyphenyl-4-decyloxybenzoat, |
| 9 % | 4-Nonyloxyphenyl-4-decyloxybenzoat, |
| 14 % | 4-Decyloxyphenyl-4-decyloxybenzoat, |
| 5 % | 2,3-Difluor-4-octyloxyphenyl-4-octyloxybenzoat, |
| 7 % | 2,3-Difluor-4-octyloxyphenyl-4-decyloxybenzoat, |
| 9 % | 2,3-Difluor-4-decyloxyphenyl-4-decyloxybenzoat, |
| 4 % | 2,3-Difluor-4-nonanoyloxyphenyl-4-octyloxybenzoat, |
| 10 % | 4′-Pentyloxybiphenyl-4-yl-4-octyloxybenzoat, |
| 8 % | 4′-Heptyloxybiphenyl-4-yl-4-octyloxybenzoat, |
| 17 % | r-1-Cyan-cis-4-(4′-octyloxybiphenyl-4-yl)-1-octylcyclohexan und |
| 11 % | chiralem 2-Chlor-3-methylbuttersäure-[p-(5-heptylpyrimidin-2-yl)-phenylester] |

zeigt $S_c^*$ 62 $S_A$ 68 Ch 81 I und eine Spontanpolarisation von 13 nC/cm$^2$ bei Raumtemperatur.

Beispiel 4

Ein flüssigkristallines Medium bestehend aus

| | |
|---|---|
| 8 % | 2-p-Octyloxyphenyl-5-octylpyrimidin, |
| 10 % | 2-p-Nonyloxyphenyl-5-octylpyrimidin, |
| 12 % | 2-p-Octyloxyphenyl-5-nonylpyrimidin, |
| 20 % | 2-p-Nonyloxyphenyl-5-nonylpyrimidin, |
| 7 % | 2,3-Difluor-4-decyloxyphenyl-4-decyloxybenzoat, |
| 7 % | 2,3-Difluor-4-octyloxyphenyl-4-decyloxybenzoat, |
| 9 % | 2-(p-Heptylphenyl)-5-(p-hexyloxyphenyl)-1,3,4-thiadiazol, |
| 9 % | 2-(p-Heptylphenyl)-5-(p-octyloxyphenyl)-1,3,4-thiadiazol, |
| 8 % | 2,3-Difluor-4-octanoyloxyphenyl-4-(5-hexylpyrimidin-2-yl)-2-fluorbenzoat und |
| 10 % | chiralem Isopropyl-2-[p-(p-decyloxyphenyl)-phenoxy]-propionat |

zeigt $S_c^*$ 58 $S_A$ und eine Spontanpolarisation von 11 nC/cm$^2$ bei Raumtemperatur.

Beispiel 5

Ein flüssigkristallines Medium bestehend aus

| | |
|---|---|
| 3 % | 2-p-Heptyloxyphenyl-5-heptylpyrimidin, |
| 5 % | 2-p-Nonyloxyphenyl-5-heptylpyrimidin, |
| 7 % | 2-p-Hexyloxyphenyl-5-nonylpyrimidin, |
| 22 % | 2-p-Nonyloxyphenyl-5-nonylpyrimidin, |
| 5 % | 2-(5-Octylpyridyl)-2,3-difluor-4-heptyloxybenzoat, |
| 9 % | [4-(5-Octylpyridin-2-yl)-phenyl]-2,3-difluor-4-octyloxybenzoat, |
| 7 % | r-1-Cyan-cis-4-(4'-heptylbiphenyl-4-yl)-1-hexylcyclohexan, |
| 12 % | r-1-Cyan-cis-4-(4'-octylbiphenyl-4-yl)-1-butylcyclohexan, |
| 20 % | r-1-Cyan-cis-4-(4'-nonyloxybiphenyl-4-yl-1-octylcyclohexan und |
| 10 % | optisch aktivem 2-Cyan-2-methylhexansäure-[p-(5-nonylpyrimidin-2-yl)-phenyl]-ester |

zeigt $S_c^*$ 64 $S_A$ 76 Ch 85 I und eine Spontanpolarisation von 21 nC/cm$^2$ bei Raumtemperatur.

Beispiel 6

Ein flüssigkristallines Medium bestehend aus

| | |
|---|---|
| 6 % | 2-p-Octyloxyphenyl-5-octylpyrimidin, |
| 8 % | 2-p-Nonyloxyphenyl-5-octylpyrimidin, |
| 6 % | 2-p-Octyloxyphenyl-5-nonylpyrimidin, |
| 24 % | 2-p-Nonyloxyphenyl-5-nonylpyrimidin, |
| 7 % | 2-(5-Nonylpyrimidyl)-2,3-difluor-4-nonyloxybenzoat, |
| 5 % | [4-(5-Heptylpyrimidin-2-yl)-phenyl]-2,3-difluor-4-octyloxybenzoat, |
| 8 % | 2-(p-Heptyloxyphenyl)-5-(p-pentylphenyl)-1,3,4-thiadiazol, |
| 9 % | 2-(p-Octyloxyphenyl)-5-(p-heptylphenyl)-1,3,4-thiadiazol, |
| 15 % | r-1-Cyan-cis-4-(4′-octyloxybiphenyl-4-yl)-1-hexylcyclohexan und |
| 12 % | optisch aktivem 2-Chlor-3-methylbuttersäure-[p-(5-octylpyrimidin-2-yl)-phenyl]-ester |

zeigt $S_c^*$ 63 $S_A$ 67 Ch 72 I und eine Spontanpolarisation von 15 nC/cm$^2$ bei Raumtemperatur.

Beispiel 7

Ein flüssigkristallines Medium bestehend aus

| | |
|---|---|
| 3 % | 2-p-Heptyloxyphenyl-5-heptylpyrimidin, |
| 3 % | 2-p-Nonyloxyphenyl-5-heptylpyrimidin, |
| 8 % | 2-p-Octyloxyphenyl-5-nonylpyrimidin, |
| 22 % | 2-p-Nonyloxyphenyl-5-nonylpyrimidin, |
| 8 % | (2,3-Difluor-4-hexyloxyphenyl)-4-(5-heptylpyrimidin-2-yl)-benzoat |
| 10 % | (2,3-Difluor-4-decyloxyphenyl)-5-heptylpyridin-2-carboxylat |
| 6 % | (2,3-Difluor-4-ethoxyethylphenyl)-2-fluor-4-(5-hexylpyrimidin-2-yl)-benzoat |
| 10 % | r-1-Cyan-cis-4-(4'-octylbiphenyl-4-yl)-1-butylcyclohexan, |
| 20 % | r-1-Cyan-cis-4-(4'-nonyloxybiphenyl-4-yl)-1-octylcyclohexan und |
| 10 % | optisch aktivem 2-Cyan-2-methylhexansäure-(4'-hexyloxybiphenyl-4-yl)-ester |

zeigt $S_c^*$ 66 $S_A$ 71 Ch 81 I und eine Spontanpolarisation von 19 nC/cm$^2$ bei Raumtemperatur.

Beispiel 8

Ein flüssigkristallines Medium bestehend aus

| | |
|---|---|
| 11 % | 4-Octyloxyphenyl-4-decyloxybenzoat, |
| 13 % | 4-Decyloxyphenyl-4-decyloxybenzoat, |
| 8 % | 4-Nonylphenyl-2,3-difluor-4-nonyloxybenzoat, |
| 12 % | 4-Heptylphenyl-p-(4-octyloxyphenyl)-benzoat, |
| 14 % | 4'-Octyloxybiphenyl-4-yl-4-heptyloxybenzoat, |
| 7 % | 4'-Octylbiphenyl-4-yl-2,3-difluor-4-nonyloxybenzoat, |
| 5 % | 4'-Octyloxy-2,3-difluorbiphenyl-4-yl-2,3-difluor-4-pentylbenzoat, |
| 5 % | 4'-Octyloxy-2',3'-difluorbiphenyl-4-yl-4-nonyloxybenzoat, |
| 11 % | 4'-Nonyloxybiphenyl-4-yl-4-heptyloxybenzoat und |
| 14 % | optisch aktivem 2-Chlor-3-methylbuttersäure-[p-(5-heptylpyrimidin-2-yl)-phenyl]-ester |

zeigt $S_c^*$ 58 $S_A$ 66 Ch 78 I und eine Spontanpolarisation von 18 nC/cm$^2$ bei Raumtemperatur.

Beispiel 9

Ein flüssigkristallines Medium bestehend aus

| | |
|---|---|
| 9 % | 4-Octyloxyphenyl-4-octyloxybenzoat, |
| 12 % | 4-Nonyloxyphenyl-4-octyloxybenzoat, |
| 8 % | 4-Nonyloxyphenyl-4-decyloxybenzoat, |
| 10 % | 4-Decyloxyphenyl-4-decyloxybenzoat, |
| 6 % | (2,3-Difluor-4-octylphenyl)-4-octyloxybenzoat, |
| 8 % | (2,3-Difluor-4-decylphenyl)-4-octyloxybenzoat, |
| 4 % | (2,3-Difluor-4-octylphenyl)-2-fluor-4-octyloxybenzoat, |
| 15 % | 4'-Heptyloxybiphenyl-4-yl-4-octyloxybenzoat, |
| 18 % | 4'-Octyloxybiphenyl-4-yl-4-octyloxybenzoat und |
| 10 % | optisch aktivem Butyl-2-[p-(5-nonylpyrimidin-2-yl-)-phenoxy]-propionat |

zeigt $S_c^*$ 59 $S_A$ 67 Ch 78 I und eine Spontanpolarisation von 9 nC/cm$^2$ bei Raumtemperatur.

Beispiel 10

Ein flüssigkristallines Medium bestehend aus

| | |
|---|---|
| 7 % | 2-p-Heptyloxyphenyl-5-octylpyrimidin, |
| 11 % | 2-p-Octyloxyphenyl-5-octylpyrimidin, |
| 6 % | 2-p-Hexyloxyphenyl-5-nonylpyrimidin, |
| 14 % | 2-p-Nonyloxyphenyl-5-nonylpyrimidin, |
| 5 % | 4'-Octyl-2,3-difluor-4-octyloxybiphenyl, |
| 7 % | 4'-Nonyl-2,3-difluor-4-nonyloxybiphenyl, |
| 8 % | 4-Pentyloxy-2,3-difluorbiphenyl-4'-carbonsäure-(p-hexylphenylester), |
| 20 % | r-1-Cyan-cis-4-(4'-octyloxybiphenyl-4-yl)-1-octylcyclohexan, |
| 12 % | r-1-Cyan-cis-4-(4'-octylbiphenyl-4-yl)-1-butylcyclohexan und |
| 10 % | optisch aktivem 2-Cyan-2-methylhexansäure-[p-(5-heptyl-pyrimidin-2-yl)-phenyl]-ester |

zeigt $S_c^*$ 59 $S_A$ 61 Ch 78 I und eine Spontanpolarisation von 18 nC/cm$^2$ bei Raumtemperatur.

Beispiel 11

Ein flüssigkristallines Medium bestehend aus

| | |
|---|---|
| 8 % | 2-p-Octyloxyphenyl-5-octylpyrimidin, |
| 12 % | 2-p-Nonyloxyphenyl-5-octylpyrimidin, |
| 7 % | 2-p-Hexyloxyphenyl-5-nonylpyrimidin, |
| 23 % | 2-p-Nonyloxyphenyl-5-nonylpyrimidin, |
| 8 % | 2-(2,3-Difluor-4-octyloxyphenyl)-5-nonyl-1,3,4-thiadiazol, |
| 8 % | 2-(2,3-Difluor-4-octyloxyphenyl)-5-heptyl-1,3,4-thiadiazol, |
| 7 % | 2-(p-Pentyloxyphenyl)-5-(p-heptylphenyl)-1,3,4-thiadiazol, |
| 7 % | 2-(p-Heptyloxyphenyl)-5-(p-heptylphenyl)-1,3,4-thiadiazol, |
| 6 % | 2-(p-Heptyloxyphenyl)-5-(2,3-difluor-4-heptylphenyl)-1,3,4-thiadiazol, |
| 4 % | 2-(4'-Heptyloxy-2,3-difluorbiphenyl-4-yl)-5-pentyl-1,3,4-thiadiazol und |
| 10 % | optisch aktivem 2-Cyan-2-methylhexansäure-(4'-octyloxybiphenyl-4-yl)-ester |

zeigt $S_c^*$ 66 $S_A$ 70 Ch 80 I und eine Spontanpolarisation von 21 nC/cm$^2$ bei Raumtemperatur.

Beispiel 12

Ein flüssigkristallines Medium bestehend aus

| | |
|---|---|
| 3 % | 2-p-Heptyloxyphenyl-5-heptylpyrimidin, |
| 4 % | 2-p-Nonyloxyphenyl-5-heptylpyrimidin, |
| 11 % | 2-p-Octyloxyphenyl-5-nonylpyrimidin, |
| 21 % | 2-p-Nonyloxyphenyl-5-nonylpyrimidin, |
| 7 % | 2-(2,3-Difluor-4-octyloxyphenyl)-5-octylpyrimidin, |
| 8 % | 2-(2,3-Difluor-4-nonyloxyphenyl)-5-nonylpyrimidin, |
| 4 % | 2-(2,3-Difluor-4-octyloxyphenyl)-5-octylpyridin, |
| 7 % | 2-(p-Heptyloxyphenyl)-5-(p-pentylphenyl)-1,3,4-thiadiazol, |
| 17 % | r-1-Cyan-cis-4-(4'-octyloxybiphenyl-4-yl)-1-octylcyclohexan, |
| 8 % | 2-(4'-Pentyloxy-2,3-difluorbiphenyl-4-yl)-5-heptylpyrimidin und |
| 10 % | optisch aktivem 2-Chlor-3-methylbuttersäure-[p-(5-heptylpyrimidin-2-yl)-phenyl]-ester |

zeigt $S_c^*$ 62 $S_A$ 66 Ch 78 I und eine Spontanpolarisation von 14 nC/cm$^2$ bei Raumtemperatur.

Beispiel 13

Ein flüssigkristallines Medium bestehend aus

| | |
|---|---|
| 8 % | 2-Octyloxyphenyl-5-octylpyrimidin, |
| 12 % | 2-p-Nonyloxyphenyl-5-octylpyrimidin, |
| 7 % | 2-p-Hexyloxyphenyl-5-nonylpyrimidin, |
| 23 % | 2-p-Nonyloxyphenyl-5-nonylpyrimidin, |
| 8 % | 2-(2,3-Difluor-4-octyloxyphenyl)-5-nonyl-1,3,4-thiadiazol, |
| 8 % | 2-(2,3-Difluor-4-octyloxyphenyl)-5-heptyl-1,3,4-thiadiazol, |
| 7 % | 2-(p-Pentyloxyphenyl)-5-(p-heptylphenyl)-1,3,4-thiadiazol, |
| 7 % | 2-(p-Heptyloxyphenyl)-5-(p-heptylphenyl)-1,3,4-thiadiazol, |
| 6 % | 2-(p-Heptyloxyphenyl)-5-(2,3-difluor-4-heptylphenyl)-1,3,4-thiadiazol, |
| 4 % | 2-(4'-Heptyloxy-2,3-difluorbiphenyl-4-yl)-5-pentyl-1,3,4-thiadiazol und |
| 10 % | optisch aktivem 2-Cyan-2-methylhexansäure-(4'-octyl-oxybiphenyl-4-yl)-ester |

zeigt $S_c^*$ 66 $S_A$ 70 Ch 80 I und eine Spontanpolarisation von 21 nC/cm$^2$ bei Raumtemperatur.

Beispiel 14

Ein flüssigkristallines Medium bestehend aus

| | |
|---|---|
| 3 % | 2-Heptyloxyphenyl-5-heptylpyrimidin, |
| 4 % | 2-p-Nonyloxyphenyl-5-heptylpyrimidin, |
| 11 % | 2-p-Octyloxyphenyl-5-nonylpyrimidin, |
| 21 % | 2-p-Nonyloxyphenyl-5-nonylpyrimidin, |
| 7 % | 2-(2,3-Difluor-4-octyloxyphenyl)-5-octylpyrimidin, |
| 8 % | 2-(2,3-Difluor-4-nonyloxyphenyl)-5-nonylpyrimidin, |
| 4 % | 2-(2,3-Difluor-4-octyloxyphenyl)-5-octylpyridin, |
| 7 % | 2-(p-Heptyloxyphenyl)-5-(p-pentylphenyl)-1,3,4-thiadiazol, |
| 17 % | r-1-Cyan-cis-4-(4'-octyloxybiphenyl-4-yl)-1-octylcyclohexan, |
| 8 % | 2-(4'-Pentyloxy-2,3-difluorbiphenyl-4-yl)-5-heptylpyrimidin und |
| 10 % | optisch aktivem 2-Chlor-3-methylbuttersäure-[p-(5-heptylpyrimidin-2-yl)-phenyl]-ester |

zeigt $S_c^*$ 62 $S_A$ 66 Ch 78 I und eine Spontanpolarisation von 14 nC/cm$^2$ bei Raumtemperatur.

Beispiel 15 bis 26

Eine achirale $S_C$-Basismischung bestehend aus

| | |
|---|---|
| 4,4 % | 2-p-Heptyloxyphenyl-5-heptylpyrimidin, |
| 4,4 % | 2-p-Octyloxyphenyl-5-heptylpyrimidin, |
| 4,4 % | 2-p-Nonyloxyphenyl-5-heptylpyrimidin, |
| 7,8 % | 2-(2,3-Difluor-4-octyloxyphenyl)-5-heptylpyrimidin |
| 7,8 % | 2-p-Hexyloxyphenyl-5-nonylpyrimidin, |
| 25,6 % | 2-p-Nonyloxyphenyl-5-nonylpyrimidin, |
| 10,0 % | 2-(2,3-Difluor-4-nonyloxyphenyl)-5-nonylpyrimidin, |
| 8,9 % | 2-(p-Hexyloxyphenyl)-5-(-p-heptylphenyl)-1,3,4-thiadiazol, |
| 11,1 % | r-1-Cyan-cis-4-(4'-octyloxybiphenyl-4-yl)-1-octylcyclohexan, |
| 8,9 % | 2-(4'-Hexyloxy-2,3-difluorbiphenyl-4-yl)-5-heptylpyrimidin und |
| 6,7 % | 2-(2,3-Difluor-4-pentyloxyphenyl)-5-(p-heptylphenyl)-1,3,4,-thiadiazol |

wird mit jeweils 10 % der folgenden Dotierstoffe A bis L versetzt. Die Phasenübergangstemperaturen und die Werte der Spontanpolarisation bei Raumtemperatur sind in der folgenden Tabelle zusammengefaßt:

| Beispiel | Dotierstoff | $S_C^*$ | $S_A$ | Ch | I | $P_S$ (nC/cm$^2$) |
|---|---|---|---|---|---|---|
| 15 | A | | 65 | 70 | 81 | 20 |
| 16 | B | | 62 | - | 78 | 11 |
| 17 | C | | 56 | 61 | 74 | 21 |
| 18 | D | | 67 | 72 | 84 | 14 |
| 19 | E | | 62 | 64 | 75 | 10 |
| 20 | F | | 70 | 73 | 87 | 17 |
| 21 | G | | 63 | 67 | 78 | 12 |
| 22 | H | | 64 | - | 79 | 12 |
| 23 | I | | 51 | 58 | 73 | 11 |
| 24 | J | | 60 | 65 | 76 | 10 |
| 25 | K | | 58 | 62 | 77 | 25 |
| 26 | L | | 72 | 78 | 88 | 18 |

Art der Dotierstoffe

A: 2-Butyl-2-methylcyanessigsäure-(4'-heptyloxy-2,3-difluorbiphenyl-4-ylester)

B: 2-[4-(p-Heptyloxyphenyl)-2,3-difluorphenoxy]-propionsäureethylester

C: 4'-Heptyloxy-2,3-difluorbiphenyl-4-carbonsäure-(1-cyanethylester)

D: 2-Chlor-3-methylbuttersäure-[4-(p-Heptyloxyphenyl)-2,3-difluorphenylester]

| | |
|---|---|
| E: | 4'-Heptyloxy-2,3-difluor-4-(1-valeroyloxy-2-propyl-oxy)-biphenyl |
| F: | 2-[4-(4'-Nonyloxy-2',3'-difluorbiphenyl-4-yl)-phen-oxy]-propionsäureethylester |
| G: | 4'-Heptyloxy-2,3-difluorbiphenyl-4-carbonsäure-(2-cyan-2-methylhexylester) |
| H: | 2-[4-(p-Heptyloxyphenyl)-2,3-difluorbenzoyloxy]-propionsäureethylester |
| I: | 4'-Heptyloxy-2,3-difluor-4-(1-cyanethoxy)-biphenyl |
| J: | 4'-Heptyloxy-2,3-difluor-4-(2-valeroyloxypropyl)-biphenyl |
| K: | 4'-Heptyloxy-2',3'-difluorbiphenyl-4-carbonsäure-(1-cyan-2-methylpropylester) |
| L: | 2-[2,3-Difluor-4(p-(p-heptyloxyphenyl)-benzoyloxy)-phenoxy]-propionsäureethylester |

Beispiel 27

Ein flüssigkristallines Medium bestehend aus

| | |
|---|---|
| 12,5 % | 4-(p-Octyloxyphenyl)benzoesäure-4-heptyloxy-2,3-difluorphenylester, |
| 14,2 % | p-Octyloxybenzoesäure-4-heptyloxy-2,3-difluorphenylester, |
| 12,5 % | 4-(p-Heptoxyphenyl)-benzoesäure-4-heptyl-2-fluor-phenylester, |
| 12,5 % | 4-(4-Heptyloxy-3-fluorphenyl)-benzoesäure-4-heptyl-2-fluorphenylester, |
| 14,2 % | p-Octyloxybenzoesäure-4-octyloxy-3-fluorphenylester, |
| 12,34 % | p-Octyloxybenzoesäure-4-pentyl-2-fluorphenylester, |
| 14,24 % | p-Hexyloxybenzoesäure-4-octyloxy-3-fluorphenylester, |
| 5,04 % | optisch aktivem 4-(p-Octylphenyl)-benzoesäure-p-(2-methylbutylphenyl)-ester und |
| 2,48 % | optisch aktivem 4-(p-Octyloxy)-benzoesäure-(1-cyan-2-methylpropylester) |

zeigt $S_c^*$ 66,4 $S_A$ 73 Ch 97 I und eine Spontanpolarisation von 9 nC/cm$^2$ bie 30 °C.

Beispiel 28

Ein flüssigkristallines Medium bestehend aus

| | |
|---|---|
| 16,87 % | 4-(4-Octyloxy-2,3-difluorphenyl)-benzoesäure-(4-octyl-2-fluorphenylester), |
| 9 % | 4-(4-Octyloxy-2,3-difluorphenyl)-benzoesäure-(4-heptyl-3-fluorphenylester), |
| 16,87 % | 4-(p-Heptyloxyphenyl)-benzoesäure-4-heptyl-2-fluorphenylester, |
| 16,87 % | 4-(4-Heptyloxy-3-fluorphenyl)-benzoesäure-4-heptyl-2-fluorphenylester, |
| 14 % | p-Octyloxybenzoesäure-4-octyloxy-3-fluorphenylester, |
| 10 % | p-Octyloxybenzoesäure-4-pentyl-2-fluorphenylester, |
| 14 % | p-Hexyloxybenzoesäure-4-octyloxy-3-fluorphenylester, |
| 2,4 % | optisch aktivem 4-(p-Octyloxy)-benzoesäure-(1-cyan-2-methylpropylester) |

zeigt $S_c^*$ 71,8 $S_A$ 81 Ch 102 I.

Beispiel 29

Ein flüssigkristallines Medium bestehend aus

| | |
|---|---|
| 8 % | 2-(4-Heptyloxy-2,3-difluorphenyl)-5-nonylpyrimidin, |
| 9 % | 2-(4-Nonyloxy-2,3-difluorphenyl)-5-nonylpyrimidin, |
| 17 % | 2-(p-Hexyloxyphenyl)-5-nonylpyrimidin, |
| 17 % | 2-(p-Heptyloxyphenyl)-5-nonylpyrimidin, |
| 17 % | 2-(p-Octyloxyphenyl)-5-nonylpyrimidin, |
| 17 % | 2-(p-Nonyloxyphenyl)-5-nonylpyrimidin und |
| 15 % | optisch aktivem 2-(p-n-Octyloxyphenyl)-5-(3-fluor-n-nonyl)-pyridin |

zeigt $S_c^*$ 63 $S_A$ 70 I und eine Schaltzeit von 30 µs bei 20 °C und 15 V/µm.

Beispiel 30

Ein flüssigkristallines Medium bestehend aus

| | |
|---|---|
| 8 % | 2-(4-Heptyloxy-2,3-difluorphenyl)-5-nonylpyrimidin, |
| 9 % | 2-(4-Nonyloxy-2,3--difluorphenyl)-5-nonylpyrimidin, |
| 6 % | 2-(p-Octyloxyphenyl)-5-pentylpyrimidin, |
| 6 % | 2-(p-Hexyloxyphenyl)-5-hexylpyrimidin, |
| 6 % | 2-(p-Ethoxyphenyl)-5-heptylpyrimidin, |
| 12 % | 2-(p-Hexyloxyphenyl)-5-nonylpyrimidin, |
| 12 % | 2-(p-Heptyloxyphenyl)-5-nonylpyrimidin, |
| 13 % | 2-(p-Octyloxyphenyl)-5-nonylpyrimidin, |
| 13 % | 2-(p-Nonyloxyphenyl)-5-nonylpyrimidin und |
| 15 % | optisch aktivem 2-(p-n-Octyloxyphenyl)-5-(3-fluor-n-nonyl)-pyridin |

zeigt $S_c^*$ 50 $S_A$ 64 Ch 67 I und eine Spontanpolarisation von 14 $nC/cm^2$ bei 20 °C.

Beispiel 31

Ein flüssigkristallines Medium bestehend aus

| | |
|---|---|
| 17,5 % | p-(3-Fluor-4-octyloxyphenyl)-benzoesäure-(2-fluor-4-heptylphenylester), |
| 17,5 % | 2,3-Difluor-4-octyloxy-4'-octanoyloxybiphenyl, |
| 17,5 % | 2,3-Difluor-4-octyloxy-4′-decanoyloxybiphenyl |
| 12,5 % | p-(2,3-Difluor-4-octyloxyphenyl)-benzeoesäure-(3-fluor-4-heptylphenylester), |
| 15 % | p-Octyloxybenzoesäure-(3-fluor-4-octyloxyphenylester), |
| 15 % | p-Hexyloxybenzoesäure-(3-fluor-4-octyloxyphenylester), |
| 5 % | p-Octyloxybenzoesäure-(2-fluor-4-pentylphenylester) und |
| 2,4 % | optisch aktivem p-(p-Octyloxyphenyl)-benzoesäure-(1-cyan-2-methylpropylester) |

zeigt $S_c^*$ 65 $S_A$ 76 N 80 I und eine Spontanpolarisation von 8,7 $nC/cm^2$ bei 30 °C.

Beispiel 32

Ein flüssigkristallines Medium bestehend aus

| | |
|---|---|
| 12,17 % | p-(3-Fluor-4-octyloxyphenyl)-benzoesäure-(2-fluor-4-heptylphenylester), |
| 12,17 % | p-(p-Heptyloxyphenyl)-benzoesäure-(2-fluor-4-heptylphenylester), |
| 12,17 % | p-(3-Fluor-4-octyloxyphenyl)-benzoesäure-(2,3-difluor-4-heptyloxyphenylester), |
| 13,83 % | p-Octyloxybenzoesäure-(3-fluor-4-octyloxyphenylester), |
| 13,83 % | p-Octyloxybenzoesäure-(2,3-difluor-4-octyloxyphenylester), |
| 13,96 % | p-Hexyoxybenzoesäure-(3-fluor-4-octyloxyphenylester), |
| 9,0 % | p-[p-(p-Octyloxybenzoyloxy)-phenyl)-benzoesäure-(2-methylbutylester), |
| 2,42 % | optisch aktivem p-(p-Octyloxyphenyl)-benzoesäure-(1-cyan-2-methylpropylester), |
| 0,45 % | optisch aktivem p-(3-Fluor-4-octyloxyphenyl)-benzoesäure-(1-cyanethylester) und |
| 10,0 % | p-Octyloxybenzoesäure-(2-fluor-4-pentylphenylester) |

zeigt $S_c^*$ 64,9 $S_A$ 77,8 N 94 I und eine Spontanpolarisation von 12,9 nC/cm$^2$ bei 30 °C.

Beispiel 33

Ein flüssigkristallines Medium bestehend aus

| | |
|---|---|
| 16,2 % | p-(2,3-Difluor-4-octyloxyphenyl)-benzoesäure-(trans-4-heptylcyclohexylester), |
| 16,2 % | p-(3-Fluor-4-octyloxyphenyl)-benzoesäure-(trans-4-heptylcyclohexylester), |
| 16,2 % | p-(3-Fluor-4-octyloxyphenyl)-benzoesäure-(2-fluor-4-heptylphenylester), |
| 15,0 % | p-Octyloxybenzoesäure-(3-fluor-4-octyloxyphenylester), |
| 14,0 % | p-Hexyloxybenzoesäure-(3-fluor-4-octyloxyphenylester), |
| 20 % | p-Octyloxybenzoesäure-(2-fluor-4-pentylphenylester) und |
| 2,4 % | optisch aktivem p-(p-Octyloxyphenyl)-benzoesäure-(1-cyan-2-methylpropylester) |

zeigt $S_c^*$ 61,4 $S_A$ 82,1 N 98,6 I und eine Spontanpolarisation von 6,2 nC/cm$^2$ bei 20 °C.

## Patentansprüche

1. Chirales getiltetes smektisches Flüssigkristallmedium enthaltend mindestens zwei flüssigkristalline Komponenten und mindestens einen chiralen Dotierstoff, dadurch gekennzeichnet, daß es mindestens eine Verbindung der Formel I enthält,

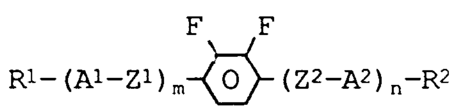

I

worin

R$^1$ und R$^2$ jeweils unabhängig voneinander unsubstituiertes, einfach durch Cyan oder mindestens einfach durch Fluor oder Chlor substituiertes Alkyl mit 1 bis 15 C-Atomen, wobei in diesen Resten jeweils auch eine $CH_2$-Gruppe durch -O-, -CO-, -O-CO-, -CO-O- oder -O-CO-O-ersetzt sein kann, einer der Reste R$^1$ und R$^2$ auch einen Chiralität induzierenden organischen Rest Q* mit einem asymmetrischen Kohlenstoffatom der Formel

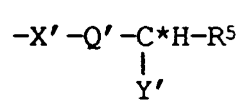

worin

X' -CO-O-, -O-CO-, -O-CO-O-, -CO-, -O-, -S-, -CH=CH-, -CH=CH-COO- oder eine Einfachbindung,

Q' Alkylen mit 1 bis 5 C-Atomen, worin auch eine nicht mit X' verknüpfte $CH_2$-Gruppe

durch -O-, -CO-, -O-CO-, -CO-O- oder -CH = CH- ersetzt sein kann, oder eine Einfachbindung,

Y' CN, Halogen, Methyl oder Methoxy, und

$R^5$ eine von Y verschiedene Alkylgruppe mit 1 bis 15 C-Atomen, worin auch eine oder zwei nicht benachbarte $CH_2$-Gruppen durch -O-, -CO-, -O-CO-, -CO-O- und/oder -CH = CH- ersetzt sein können,

bedeutet,

$A^1$ und $A^2$ jeweils unabhängig voneinander unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N ersetzt sein können, 1,4-Cyclohexylen, worin auch eine oder zwei nicht benachbarte $CH_2$-Gruppen durch O-Atome und/oder S-Atome ersetzt sein können, Piperidin-1,4-diyl, 1,4-Bicyclo(2,2,2)octylen, 1,3,4-Thiadiazol-2,5-diyl, Naphthalin-2,6-diyl- oder 1,2,3,4-Tetrahydronaphthalin-2,6-diyl,

$Z^1$ und $Z^2$ jeweils -CO-O-, -O-CO-, $-CH_2CH_2-$, $-OCH_2-$, $-CH_2O-$, -C≡C- oder eine Einfachbindung,

m und n jeweils 0, 1 oder 2, und

(m + n) 1 oder 2 bedeutet,

mit der Maßgabe, daß eine oder zwei der im Molekül der Formel I anwesenden Gruppen $Z^1$ und/oder $Z^2$ -CO-O-, -O-CO-, $-CH_2CH_2-$, $-OCH_2-$, $-CH_2O-$ oder -C≡C- bedeuten, falls $A^1$ und $A^2$ jeweils unabhängig voneinander unsubstituiertes oder durch ein oder zwei F-Atome substituiertes 1,4-Phenylen bedeuten.

**2.** Medium nach Anspruch 1 , dadurch gekennzeichnet, daß in der Verbindung der Formel I die Gruppe

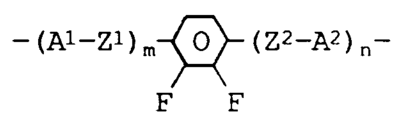

eine Gruppe der Formeln 1 bis 16 oder deren Spiegelbild bedeutet:

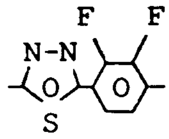

1

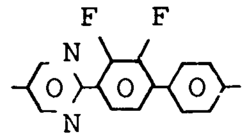

2

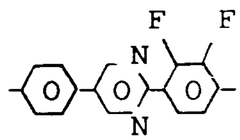

3

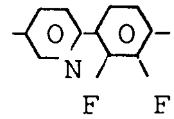

4

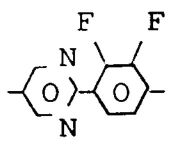

5

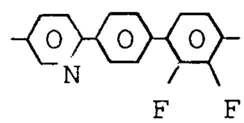

6

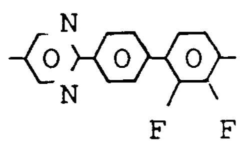

7

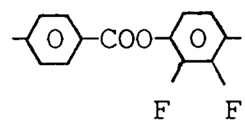

8

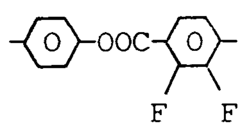

9

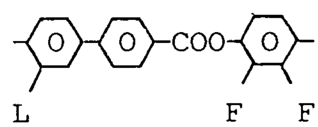

10

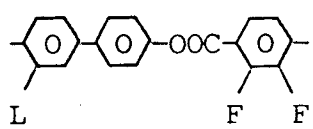

11

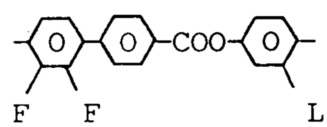

12

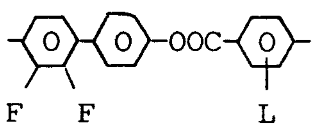

13

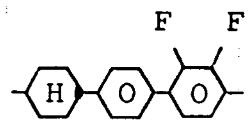

14

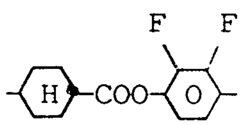

15

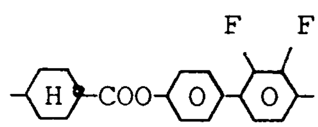

16

L ist H oder F.

**3.** Medium nach Anspruch 1 oder 2, dadurch gekennzeichnet, daß es mindestens 25 % an einer oder mehreren Verbindungen der Formel II enthält,

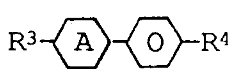

II

worin

$R^3$ und $R^4$ jeweils unabhängig voneinander unsubstituiertes, einfach durch Cyan oder mindestens einfach durch Fluor oder Chlor substituiertes Alkyl mit 1 bis 15 C-Atomen oder Alkenyl mt 3 bis 15 C-Atomen, wobei in diesen Resten jeweils auch eine $CH_2$-Grupe durch -O-, -CO-, -O-CO-, -CO-O- oder -O-CO-O- ersetzt sein kann,

und Ring A Pyrimidin-2,5-diyl oder Pyridin-2,5-diyl ist.

**4.** Medium nach Anspruch 3, dadurch gekennzeichnet, daß es eine oder mehrere Verbindungen der Formel IId, IIg und/oder IIh enthält,

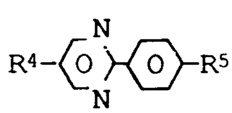

IId

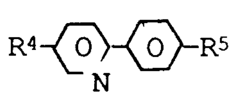

IIg

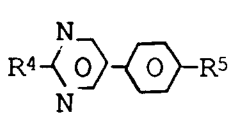

IIh

worin $R^4$ und $R^5$, jeweils unabhängig voneinander Alkyl, Alkoxy, Alkanoyloxy oder Alkoxycarbonyl mit jeweils 3 bis 12 C-Atomen bedeuten.

**5.** Medium nach Anspruch 4, dadurch gekennzeichnet, daß es eine oder mehrere Verbindungen der

Formel IId und/oder IIh und gleichzeitig eine oder mehrere Verbindungen der Formel IIg enthält.

6. Medium nach mindestens einem der Ansprüche 1 bis 5, dadurch gekennzeichnet, daß es 2 bis 25 % eines chiralen Dotierstoffes enthält.

7. Medium nach Anspruch 6, dadurch gekennzeichnet, daß der Dotierstoff $S_c$*-Phase aufweist.

8. Medium nach mindestens einem der Ansprüche 1 bis 7, dadurch gekennzeichnet, daß es 8 bis 50 % an einer oder mehreren Verbindungen der Formel I enthält.

9. Medium nach anspruch 8, dadurch gekennzeichnet, daß es eine oder mehrere Verbindungen der Formel Ia' enthält,

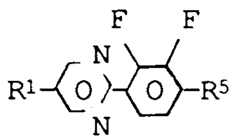

Ia'

worin $R^1$ und $R^2$ die angegebene Bedeutung haben.

10. Medium nach Anspruch 1, dadurch gekennzeichnet, daß Q* einen Rest der Formel

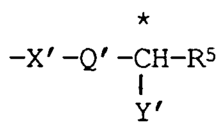

bedeutet, worin

X' -CO-O-, -O-CO- oder eine Einfachbindung,
Q' ist vorzugsweise $-CH_2-$, $-CH_2CH_2-$, $-CH_2CH_2CH_2-$ oder eine Einfachbindung,
Y' CN oder F,
$R^5$ ist geradkettiges oder verzweigtes Alkyl mit 1 bis 10

bedeutet.

11. Medium nach Anspruch 1, dadurch gekennzeichnet, daß es eine oder mehrere Verbindungen der Formeln Ia, Ib oder Ic enthält,

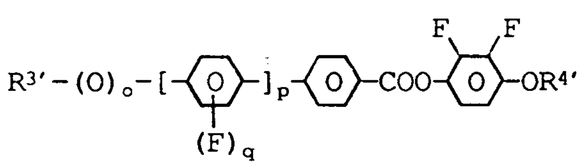

Ia,

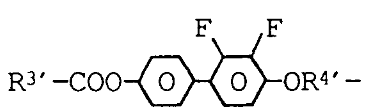

Ib,

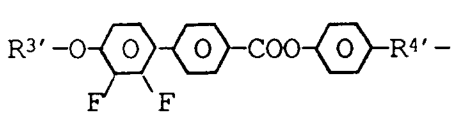

Ic

worin

| | |
|---|---|
| $R^{3'}$ und $R^{4'}$ | jeweils unabhängig voneinander Alkyl mit 1 bis 15 C-Atomen und |
| o, p und q | jeweils 0 oder 1 bedeutet. |

**12.** Verwendung von Verbindungen der Formel nach Anspruch 1 als Komponenten chiraler getilteter smektischer Flüssigkristallmedien.

**13.** Elektrooptische Anzeigeelemente, dadurch gekennzeichnet, daß es als Dielektrikum ein Medium nach mindestens einem der Ansprüche 1 bis 11 enthält.

## Claims

**1.** Chiral, tilted smectic liquid-crystal medium containing at least two liquid-crystal components and at least one chiral doping agent, characterized in that it contains at least one compound of the formula 1

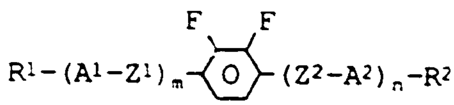

I

wherein

| | |
|---|---|
| $R^1$ and $R^2$ | are alkyl having 1 to 15 C atoms, each of which, independently of one another, is unsubstituted, monosubstituted by cyano or at least monosubstituted by fluorine or chlorine, it being also possible for a $CH_2$ group in these radicals to be replaced in each case by -O-, -CO-, -O-CO-, -CO-O- or -O-CO-O-, and one of the radicals $R^1$ and $R^2$ also denotes an organic radical Q* which induces chirality and which has an asymmetric carbon atom of the formula, |

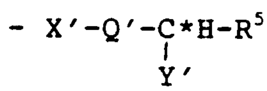

wherein

| | |
|---|---|
| X' is | -CO-O, -O-CO-, -O-CO-O-, -CO-, -O-, -S-, -CH=CH-, -CH=CH-COO- or a single bond, |
| Q' is | alkylene which has 1 to 5 C atoms and in which a $CH_2$ group not attached to X' can be replaced by -O-, -CO-, -O-CO-, -CO-O- or -CH=CH-, or is a single bond, |
| Y' is | CN, halogen, methyl or methoxy, and |
| $R^5$ is | an alkyl group different from Y which has 1 to 15 C atoms and in which one or two non-adjacent $CH_2$ groups can be replaced by -O-, -CO-, -O-CO-, -CO-O- and/or -CH=CH-. |
| $A^1$ and $A^2$, | independently of one another, are each 1,4-phenylene wherein one or two CH groups can also be replaced by N, 1,4-cyclohexylene wherein one or two non-adjacent $CH_2$ groups can also be replaced by O atoms and/or S atoms, piperidine-1,4-diyl, 1,4-bicyclo(2,2,2)octylene, 1,3,4-thiadiazole-2,5-diyl, naphthalene-2,6-diyl or 1,2,3,4-tetrahydronaphthalene-2,6-diyl, each of which is unsubstituted or substituted by one or two F and/or Cl atoms and/or $CH_3$ groups and/or CN groups, |
| $Z^1$ and $Z^2$ | are each -CO-O-, -O-CO-, $-CH_2CH_2-$, $-OCH_2-$, $-CH_2O-$, -C≡C- or a single bond, |
| m and n | are each 0, 1 or 2 and |
| (m + n) | is 1 or 2, |

subject to the proviso that one or two of the groups $Z^1$ and/or $Z^2$ present in the molecule of the formula I are -CO-O-, -O-CO-, $-CH_2CH_2-$, $-OCH_2-$, $-CH_2O-$ or -C≡C-, if $A^1$ and $A^2$ independently of one another are each 1,4-phenylene which is unsubstituted or substituted by one or two F atoms.

**2.** Medium according to Claim 1, characterized in that in the compound of the formula I the group

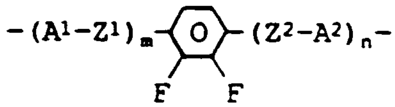

is a group of the formulae 1 to 16 or a mirror-image thereof;

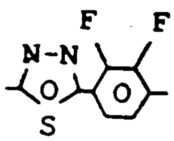

1

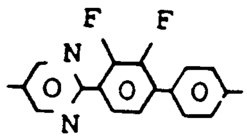

2

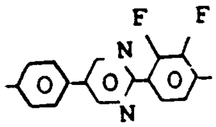

3

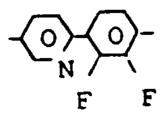

4

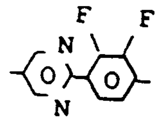

5

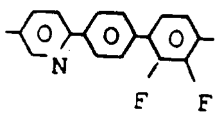

6

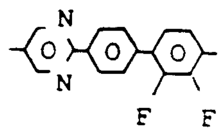

7

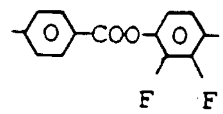

8

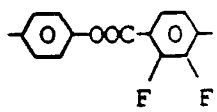

9

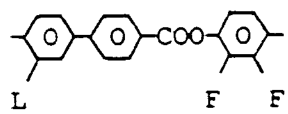

10

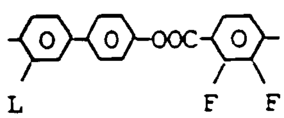

11

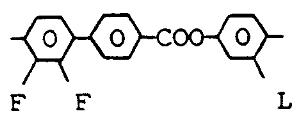

12

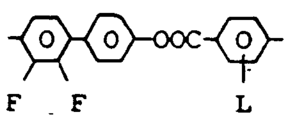

13

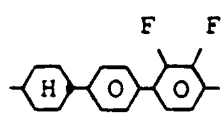

14

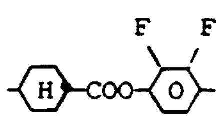

15

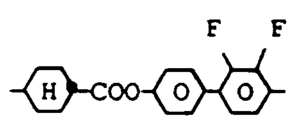

16

L is H or F.

**3.** Medium according to Claim 1 or 2, characterized in that it contains at least 25 % of one or more compounds of the formula II

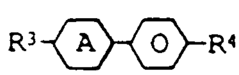

II

wherein

$R^3$ and $R^4$, independently of one another, are each alkyl which has 1 to 15 C atoms or alkenyl which has 3 to 15 C atoms, each of which is unsubstituted, monosubstituted by cyano or at least monosubstituted by fluorine or chlorine, it being also possible for a $CH_2$ group to be replaced by -O-, -CO-, -O-CO--CO-O- or -O-CO-O- in each of these radicals,

and Ring A is pyrimidine-2,5-diyl or pyridine-2,5-diyl.

**4.** Medium according to Claim 3, characterized in that it contains one or more compounds of the formula IId, IIg and/or IIh

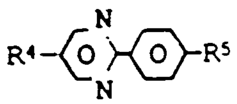

IId

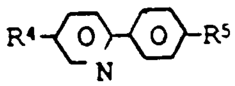

IIg

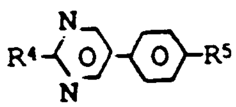

IIh

wherein $R^4$ and $R^5$ are, independently of one another, each alkyl, alkoxy, alkanoyloxy or alkoxycarbonyl having in each case 3 to 12 C atoms.

**5.** Medium according to Claim 4, characterized in that it contains one or more compounds of the formulae IId and/or IIh and, at the same time, one or more compounds of the formula IIg.

**6.** Medium according to at least one of Claims 1 to 5, characterized in that it contains 2 to 25 % of a chiral doping agent.

**7.** Medium according to Claim 6, characterized in that the doping agent has an $S_c^*$ phase.

**8.** Medium according to at least one of Claims 1 to 7, characterized in that it contains 8 to 50 % of one or more compounds of the formula I.

**9.** Medium according to Claim 8, characterized in that it contains one or more compounds of the formula Ia'

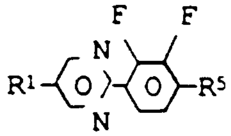

Ia'

wherein $R^1$ and $R^2$ have the meaning indicated.

**10.** Medium according to Claim 1, characterized in that Q* is a radical of formula

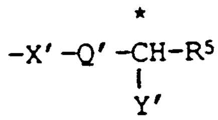

wherein

X' is -CO-O-, -O-CO- or a single bond,

Q' is preferably $-CH_2-$, $-CH_2CH_2-$, $-CH_2CH_2CH_2-$ or a single bond,

Y' is CN or F, and

$R^5$ is straight-chain or branched alkyl having 1 to 10 [lacuna].

**11.** Medium according to Claim 1, characterized in that it contains one or more compounds of the formulae Ia, Ib or Ic

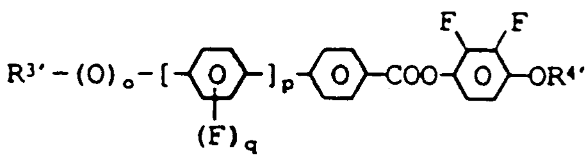
Ia

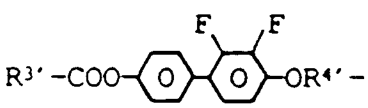
Ib

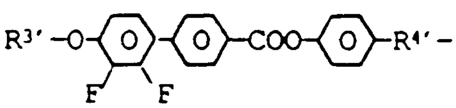
Ic

wherein

$R^{3'}$ and $R^{4'}$, independently of one another, are each alkyl having 1 to 15 C atoms and

o, p and q are each 0 or 1.

**12.** Use of compounds of the formula according to Claim 1 as components of chiral, tilted, smectic liquid-crystal media.

**13.** Electrooptical display elements [sic], characterized in that it contains, as the dielectric, a medium according to at least one of Claims 1 to 11.

## Revendications

**1.** Milieu à cristaux liquides smectique auquel on a conféré des propriétés de chiralité, contenant au moins deux composants à cristaux liquides et au moins un additif chiral, caractérisé en ce qu'il contient au moins un composé de formule I

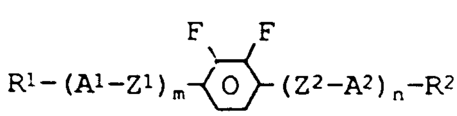
I

dans laquelle

$R^1$ et $R^2$ représentent chacun, indépendamment l'un de l'autre, un groupe alkyle en C 1-C 15

non substitué ou portant un substituant cyano ou au moins un substituant fluoro ou chloro, et dans lequel un groupe $CH_2$ peut être remplacé par -O-, -CO-, -O-CO-, -CO-O- ou -O-CO-O-, l'un des symboles $R^1$ et $R^2$ représentant également un radical organique Q* induisant la chiralité, qui contient un atome de carbone asymétrique et répond à la formule

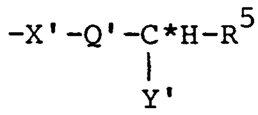

dans laquelle

X' représente -CO-O-, -O-CO-, -O-CO-O-, -CO-, -O-, -S-, -CH = CH-, -CH = CH-COO- ou une liaison simple

Q' représente un groupe alkylène en C 1-C 5 dans lequel également un groupe $CH_2$ non relié à X' peut être remplacé par -O-, -CO-, -O-CO-, -CO-O- ou -CH = CH-, ou une liaison simple,

Y' représente CN, un halogène, un groupe méthyle ou méthoxy, et

$R^5$ représente un groupe alkyle en C 1-C 15 différent de Y et dans lequel également un ou deux groupes $CH_2$ non voisins peuvent être remplacés par -O-, -CO-, -O-CO-, -CO-O- et/ou -CH = CH-,

$A^1$ et $A^2$ représentent chacun, indépendamment l'un de l'autre, un groupe 1,4-phénylène non substitué ou substitué par 1 ou 2 atomes de F et/ou de Cl et/ou groupes $CH_3$ et/ou groupes CN et dans lequel également un ou deux groupes CH peuvent être remplacés par N, un groupe 1,4-cyclohexylène dans lequel également un ou deux groupes $CH_2$ non voisins peuvent être remplacés par des atomes d'oxygène et/ou de soufre, un groupe pipéridine-1,4-diyle, 1,4-bicyclo(2,2,2)octylène, 1,3,4-thiadiazole-2,5-diyle, naphtalène-2,6-diyle ou 1,2,3,4-tétrahydronaphtalène-2,6-diyle,

$Z^1$ et $Z^2$ représentent chacun -CO-O-, -O-CO-, $-CH_2CH_2-$, $-OCH_2-$, $-CH_2O-$ ou -C≡C- ou une liaison simple,

m et n sont égaux chacun à 0, 1 ou 2, et

(m + n) est égal à 1 ou 2,

sous réserve qu'un ou deux des groupes $Z^1$ et/ou $Z^2$ présents dans la molécule de formule I sont des groupes -CO-O-, -O-CO-, $-CH_2CH_2-$, $-OCH_2-$, $-CH_2O-$ ou -C≡C- lorsque $A^1$ et $A^2$ représentent chacun, indépendamment l'un de l'autre, un groupe 1,4-phénylène non substitué ou substitué par 1 ou 2 atomes de F.

2. Milieu selon revendication 1, caractérisé en ce que, dans le composé de formule I, le groupe

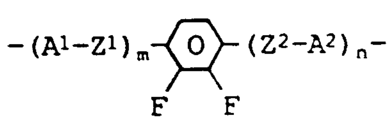

est un groupe de formule 1 à 16 ou son image spéculaire :

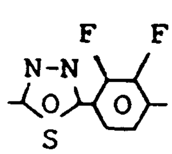

1

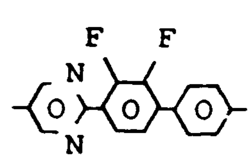

2

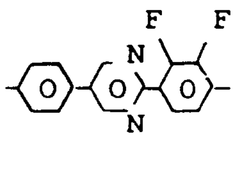

3

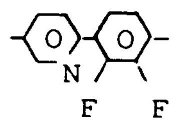

4

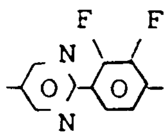

5

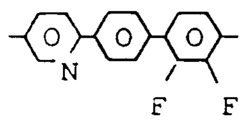

6

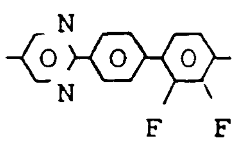

7

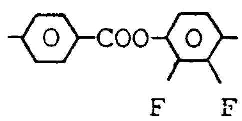

8

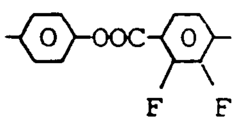

9

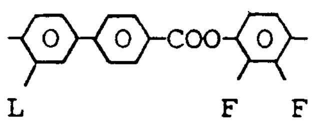

10

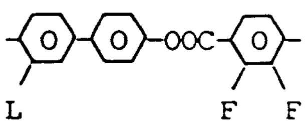

11

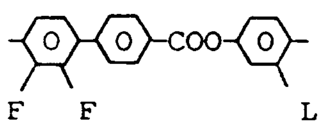

12

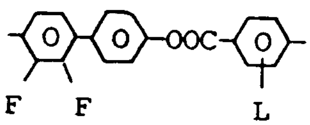

13

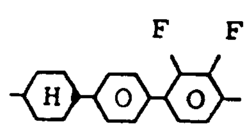

14

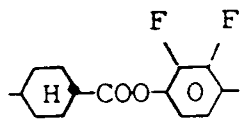

15

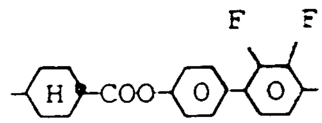

16

L représente H ou F.

**3.** Milieu selon revendication 1 ou 2, caractérisé en ce qu'il contient au moins 25 % d'un ou plusieurs composés de formule II

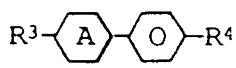

II

dans laquelle

$R^3$ et $R^4$ représentent chacun, indépendamment l'un de l'autre, un groupe alkyle en C 1-C 15 ou alcényle en C 3-C 15 non substitué, portant un substituant cyano ou au moins un substituant fluoro ou chloro, et dans lequel également un groupe $CH_2$ peut être remplacé par -O-, -CO-, -O-CO-, -CO-O-, ou -O-CO-O-,

et le cycle A est un cycle pyrimidine-2,5-diyle ou pyridine-2,5-diyle.

**4.** Milieu selon revendication 3, caractérisé en ce qu'il contient un ou plusieurs composés de formule IId, IIg, et/ou IIh

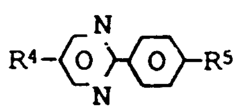

IId

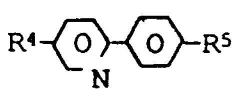

IIg

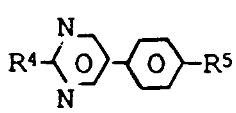

IIh

dans lesquelles $R^4$ et $R^5$ représentent chacun, indépendamment l'un de l'autre, un groupe alkyle, alcoxy, alcanoyloxy ou alcoxycarbonyle contenant chacun 3 à 12 atomes de carbone.

**5.** Milieu selon revendication 4, caractérisé en ce qu'il contient un ou plusieurs composés de formule IId et/ou IIh et, simultanément, un ou plusieurs composés de formule IIg.

**6.** Milieu selon au moins une des revendications 1 à 5, caractérisé en ce qu'il contient de 2 à 25 % d'un additif chiral.

**7.** Milieu selon revendication 6, caractérisé en ce que l'additif a une phase $S_c$*.

**8.** Milieu selon au moins une des revendications 1 à 7, caractérisé en ce qu'il contient de 8 à 50 % d'un ou plusieurs composés de formule I.

**9.** Milieu selon revendication 8, caractérisé en ce qu'il contient un ou plusieurs composés de formule Ia'

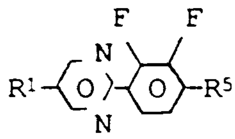

Ia'

dans laquelle $R^1$ et $R^2$ ont les significations indiquées ci-dessus.

**10.** Milieu selon revendication 1, caractérisé en ce que Q* représente un groupe de formule

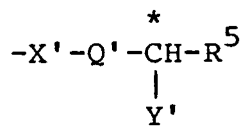

dans laquelle

| | |
|---|---|
| X' | représente -CO-O-, -O-CO- ou une liaison simple, |
| Q' | représente de préférence $-CH_2-$, $CH_2CH_2-$, $-CH_2CH_2CH_2-$ou une liaison simple, |
| Y' | représente CN ou F, |
| $R^5$ | représente un groupe alkyle à chaîne droite ou ramifiée en C 1-C 10. |

**11.** Milieu selon revendication 1, caractérisé en ce qu'il contient un ou plusieurs composés de formule Ia, Ib ou Ic

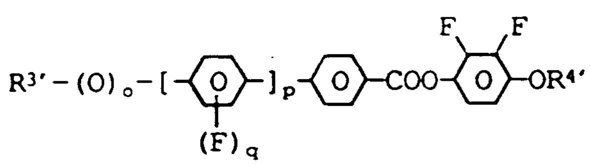

Ia,

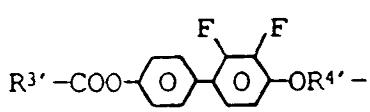

Ib,

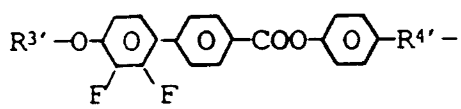

Ic

dans lesquelles

| | |
|---|---|
| $R^{3'}$ et $R^{4'}$ | représentent chacun, indépendamment l'un de l'autre, un groupe alkyle en C 1-C 15, et |
| o, p et q | sont égaux chacun à 0 ou 1. |

**12.** Utilisation des composés répondant à la formule de la revendication 1 en tant que composants de milieux à cristaux liquides smectiques auxquels on a conféré des propriétés de chiralité.

**13.** Elément d'affichage électro-optique, caractérisé en ce qu'il contient en tant que diélectrique un milieu selon au moins une des revendications 1 à 11.